# EUROPEAN PATENT APPLICATION

(11) **EP 1 646 013 A2**
(43) Date of publication of application: **12.04.2006**
(21) Application number: 05252672.0
(22) Date of filing: 28.04.2005
(51) Int. Cl.: G07C 9/00, G07F 7/10

(54) **Individual authentication method, individual authentication device, and program for same**

(30) Priority: 08.10.2004 JP 2004296975
(71) Applicant: FUJITSU LIMITED, Kawasaki-shi, Kanagawa 211-8588 (JP); Fujitsu Frontech Limited, Inagi-shi, Tokyo 206-8555 (JP)
(72) Inventor: Chigira, Kenichi, c/o Fujitsu Terminal Syst. Ltd., Maebashi-shi, Gunma 371-0855 (JP); Izawa, Shuuichi c/o Fujitsu Terminal Systems Ltd., 371-0855 Japan (JP); Narita, Yuuichi c/o Fujitsu Termimal Systems Ltd., 371-0855 Japan (JP)
(74) Representative: Stebbing, Timothy Charles

(57) **Abstract**

An individual authentication device (6), which verifies individual data on a storage device (5) against input individual data and performs individual authentication, is enabled to make a smooth transition to biometric authentication. The device judges whether a biometrics unit is installed, and by judging whether the biometrics unit (1) is installed, selects between individual authentication by the biometrics unit (1) and individual authentication by verifying individual data of the storage device (5) against input individual data. An individual authentication device upon which biometric authentication functions are not implemented can thus make a smooth transition to biometric authentication.

## Description

This invention relates to an individual authentication method, individual authentication device, and program for same to verify input data obtained from a user against individual data on a storage device of the user in order to perform individual authentication, and in particular relates to an individual authentication method, individual authentication device, and program for same which utilize a biometric authentication unit to read biometric information for the user, and verify the information against registered biometric information.

Automated transaction machines which are operated by users are in wide use. Such automated transaction machines include automated cash dispensers, automated deposit/withdrawal machines, and automated balance transfer machines for financial transactions, as well as automated ticket dispensers and automated certification document dispensers.

Such automated transaction machines are operated by users to perform deposit/withdrawal, cash transfer, document issuing, and other transactions. Hence from the standpoint of prevention of illicit operations, it is essential that such automated transaction machines perform individual authentication of users. In the individual authentication methods used in the prior art, a card on which is recorded individual information is issued, and when performing the automated transaction, a card password number or other individual data is read and is compared with the password number input by the user.

Through advances in computer technology in recent years, such password-based individual authentication methods, which are specific to users, entail the use of simple strings of numbers which can be easily analyzed, and so from the standpoint of preventing illicit operations have become unsatisfactory. Hence various biometric-based authentication technologies utilizing biometric characteristics have been proposed for use in individual authentication.

The human body has numerous portions enabling identification of the individual, such as fingerprints, the retinas of the eyes, facial characteristics, and blood vessels. Advances in biometrics technology in recent years have led to the proposal of various devices for identification of such biometric characteristics which are properties of the human body, to perform individual authentication (see Japanese Patent Laid-open No. 2003-256912).

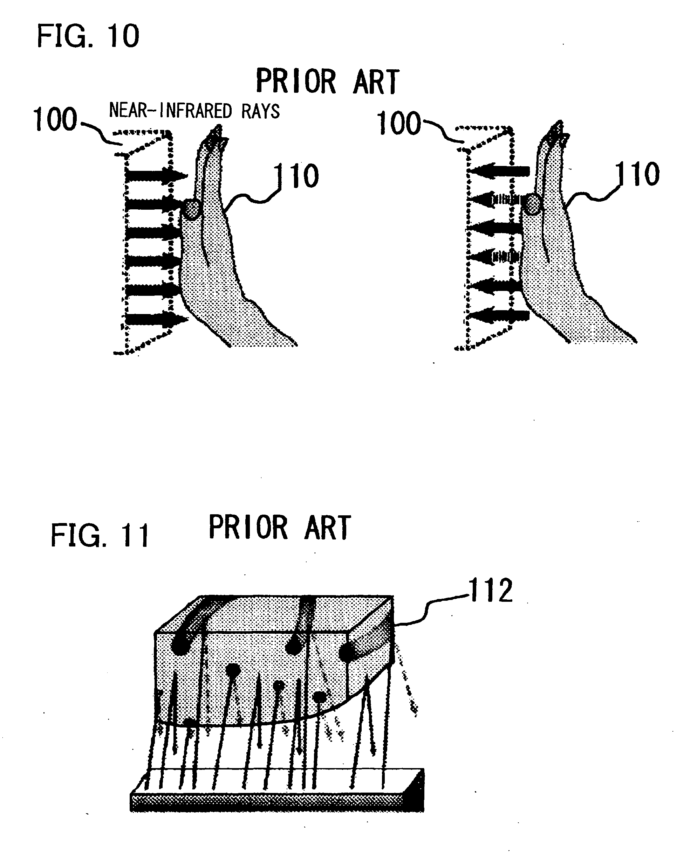

For example, blood vessel patterns in the palms and fingers or palm-prints constitute a comparatively large amount of individual characteristic data, and so are appropriate to ensure reliability of individual authentication. In particular, blood vessel (vein) patterns remain unchanged throughout life from infancy, and are regarded as being completely unique, and so are well-suited to individual authentication. Fig. 10 through Fig. 13 explain conventional palm authentication techniques. As shown in Fig. 10, at the time of registration or authentication, the user places the palm of the hand 110 into proximity with an image capture device 100. The image capture device 100 emits near-infrared rays, which are incident on the palm of the hand 110. The image capture device 100 uses a sensor to capture near-infrared rays rebounding from the palm of the hand 110.

As shown in Fig. 11, hemoglobin in the red corpuscles flowing in the veins 112 has lost oxygen. This hemoglobin (reduced hemoglobin) absorbs near-infrared rays at wavelengths near 760 nanometers. Consequently when near-infrared rays are made incident on the palm of a hand, reflection is reduced only in the areas in which there are veins, and the intensity of the reflected near-infrared rays can be used to identify the positions of veins.

As shown in Fig. 10, the user first uses the image capture device 100 of Fig. 10 to register vein image data of the palm of his own hand in a server or on a card. Then, in order to perform individual authentication, the user employs the image capture device 100 of Fig. 10 to read the vein image data of his own hand.

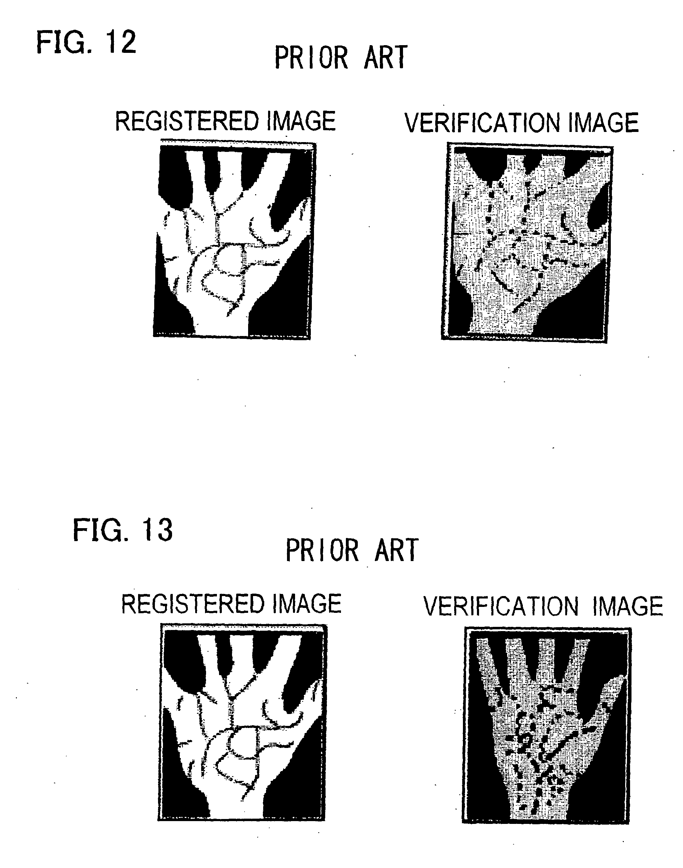

The individual is authenticated by comparing the patterns of veins in the registered vein image retrieved using the user's ID recorded on a card and in the vein verification image thus read. For example, on comparing the vein patterns in the registered image and a verification image as in Fig. 12, the individual is authenticated as the individual in question. On the other hand, upon comparison of the vein patterns in a registered image and in a verification image as in Fig. 13, the individual is not authenticated (see for example Japanese Patent Laid-open No. 2004-062826).

In such an automated transaction machine, when provided with biometrics equipment, biometric-based authentication can be combined with password-based authentication to further improve the effectiveness of prevention of illicit operations (see for example Japanese Patent Laid-open No. 2003-256912).

When new automated transaction machines equipped with biometrics devices are provided to users by a manufacturer, an extremely large number (for example, thousands) of the automated transaction machines must be installed and must begin operation within the same period of time, possibly resulting in confusion with respect to production by the manufacturer and education of users in machine operation.

Hence a method is desirable in which biometrics devices are installed in sequence on previously-installed existing or new automated transaction machines, and operation is begun in sequence. However, even if the biometrics device hardware is installed, if a program having biometrics authentication functions (programs) and functions for linking to transaction processing is not also installed in the automated transaction machines, automated transaction operations using biometric authentication are not possible.

It is desirable that a program-related to the biometrics devices be installed simultaneously in the automated transaction machines; but if both are installed simultaneously, time is required for test operation and other transition tasks. Hence for the manufacturer, from the standpoints of the schedules of support engineers and the transition task time described above until the start of actual operation, there is a limit to the number of automated transaction machines capable of transition to the operating state per day.

From the standpoint of users, because normally it is necessary to halt operation of an existing automated transaction machine to perform the required installation and operation testing, if possible, it would be desirable that transition tasks be performed outside the hours of operation of the automated transaction machine. However, as explained above, the number of machines for which transition can be effected outside the hours of operation is limited due to the time required for transition tasks, and it is difficult to provide numerous automated transaction machines with biometrics functions. Hence if operation of existing automated transaction machines is not halted within the hours of operation, it is difficult to effect transition for a large number of machines, and so there is the possibility that users of automated transaction machines will be inconvenienced.

It is therefore desirable to provide an individual authentication method, individual authentication device, and program for same to enable smooth transition from an individual authentication device in which biometric authentication functions are not installed, to an individual authentication device in which biometric authentication functions are installed.

It is further desirable to provide an individual authentication method, individual authentication device, and program for same to start operations of the biometric functions of an individual authentication device in a short time, when a biometrics device is installed in an individual authentication device not having biometric authentication functions.

Still another object of this invention is to provide an individual authentication method, individual authentication device, and program for same to effect the smooth transition of an individual authentication device in which biometric authentication functions are not installed to an individual authentication device in which biometric authentication functions are installed, and, when a biometrics device is not installed, to utilize the individual authentication functions of an individual authentication device for operations.

According to a first aspect ; an individual authentication device of this invention reads individual data from a storage device of a user, verifies this data against the input individual data, and performs individual authentication. Further, the individual authentication device has a reading unit which reads the storage device of a user, and a control unit which judges whether there is installed a biometrics unit which verifies registered biometric characteristic data based on the individual data of the storage device against biometric characteristic data detected from the living body and performs individual authentication. When the control unit judges that a biometrics unit is installed, individual authentication is executed using the biometrics unit; when it is judged that a biometrics unit is not installed, individual authentication is executed in which the individual data in the storage device is verified against input individual data.

An individual authentication method of this invention has the steps of judging whether there is installed a biometrics unit which verifies registered biometric characteristic data using individual data on a storage device of the user against the biometric characteristic data detected from the body of the user to perform individual authentication; executing individual authentication using the biometrics unit when it is judged that a biometrics unit is installed; and executing individual authentication in which the individual data of the storage device is verified against input individual data when it is judged that a biometrics unit is not installed.

A program of this invention causes a computer to execute the steps of judging whether there is installed a biometrics unit which verifies registered biometric characteristic data using individual data on a storage device of the user against the biometric characteristic data detected from the body of the user to perform individual authentication; executing individual authentication using the biometrics unit when it is judged that a biometrics unit is installed; and executing individual authentication in which the individual data of the storage device is verified against input individual data when it is judged that a biometrics unit is not installed.

In this invention, it is preferable that the control unit queries (polls or interrogates) the biometrics unit to check whether any biometrics unit is installed.

In this invention, it is preferable that the control unit judges, based on configuration information for the individual authentication device, whether there is installed a biometrics unit.

In this invention, it is preferable that the control unit operates an automated transaction mechanism which performs automated transaction operations according to the result of individual authentication.

In this invention, it is preferable that, upon judging that a biometrics unit is not installed, the control unit interrupts transaction operations using the storage device.

In this invention, it is preferable that the biometrics unit captures images of the human body, extracts characteristic data for the body, and verify the extracted data against registered biometric characteristic data on the storage device, to perform individual authentication.

In this invention, it is preferable that the biometrics unit has an image capture unit which captures images of the body, and an authentication unit which extracts the biometrics characteristic data from the captured images, verifies the extracted characteristic data against registered biometrics characteristic data on the storage device, and performs individual authentication.

In this invention, it is preferable that the biometrics characteristic data be blood vessel image patterns of the body.

In this invention, it is preferable that the control unit has installed a middleware program which judges whether a biometrics unit is installed, and upon judging that a biometrics unit exists executes individual authentication using the biometrics unit, but upon judging that a biometrics unit does not exist executes individual authentication in which individual data on a storage device is verified against input individual data, and a transaction processing program, which controls the automated transaction mechanism which performs automated transactions according to the result of the individual authentication.

In this invention, whether a biometrics unit exists is judged and a selection is made, according to the decision as to whether a biometrics unit exists, between individual authentication using the biometrics unit and individual authentication by verification of the individual data of storage device against input individual data, so that an individual authentication device in which biometrics authentication functions are not installed can make a smooth transition to an individual authentication device in which biometrics authentication functions are installed, and even when a biometrics device is not installed, the individual authentication functions of the individual authentication device can be utilized in operation.

The storage device may be a recording medium such as an IC card.

In the drawings:
Fig. 1 shows the configuration of an automated transaction system of one embodiment of the invention;
Fig. 2 is a perspective view of the ATM of Fig. 1;
Fig. 3 is a block diagram of the ATM of Fig. 1;
Fig. 4 is a functional block diagram of the biometric information verification processing of Fig. 3;
Fig. 5 is a side view showing the relation between the sensor in Fig. 4 and the palm of the hand;
Fig. 6 explains the blood vessel image in Fig. 4;
Fig. 7 explains the blood vessel image data in Fig. 4;
Fig. 8 shows the configuration of the program of a control unit in one embodiment of the invention;
Fig. 9 shows the flow of transaction processing by a program configured as in Fig. 8;
Fig. 10 shows a conventional palm image capture device;
Fig. 11 shows the principle of a conventional palm image capture device;
Fig. 12 shows explanation of conventional palm authentication technology; and,
Fig. 13 shows another explanation of conventional palm authentication technology.

Below, aspects of the invention are explained, in the order of an automated transaction system, biometric authentication processing, individual authentication control method, and other embodiments.

### Automated Transaction System

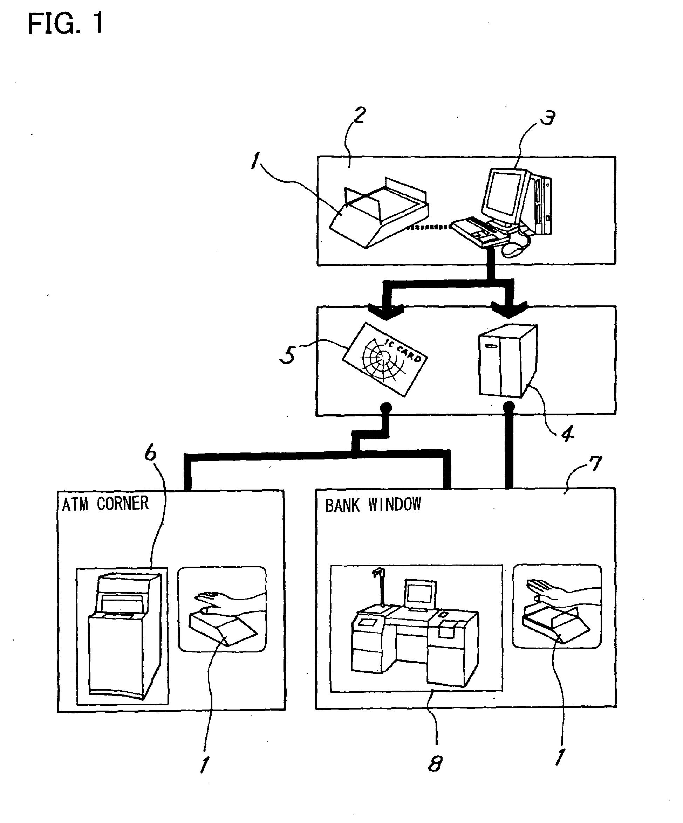

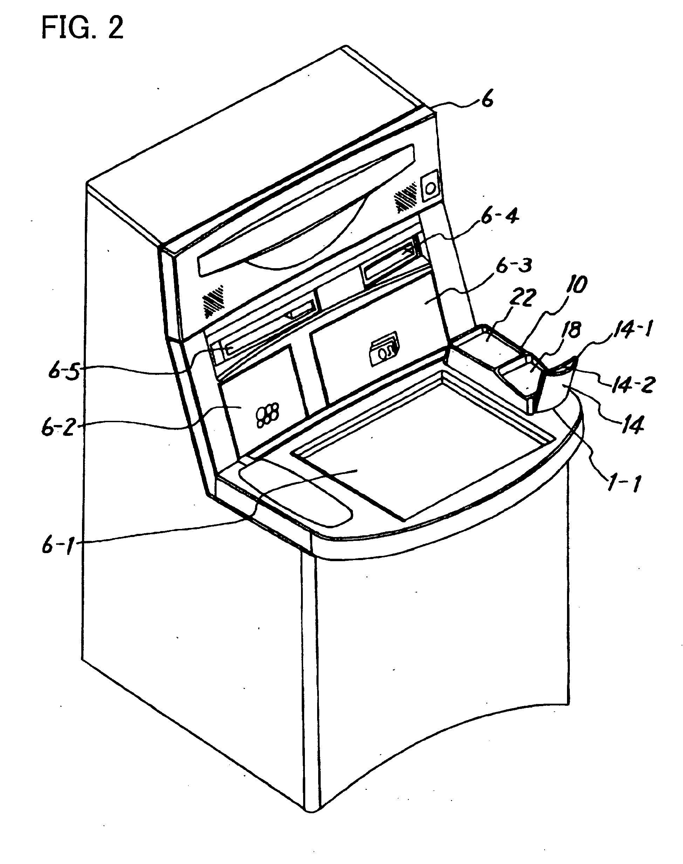

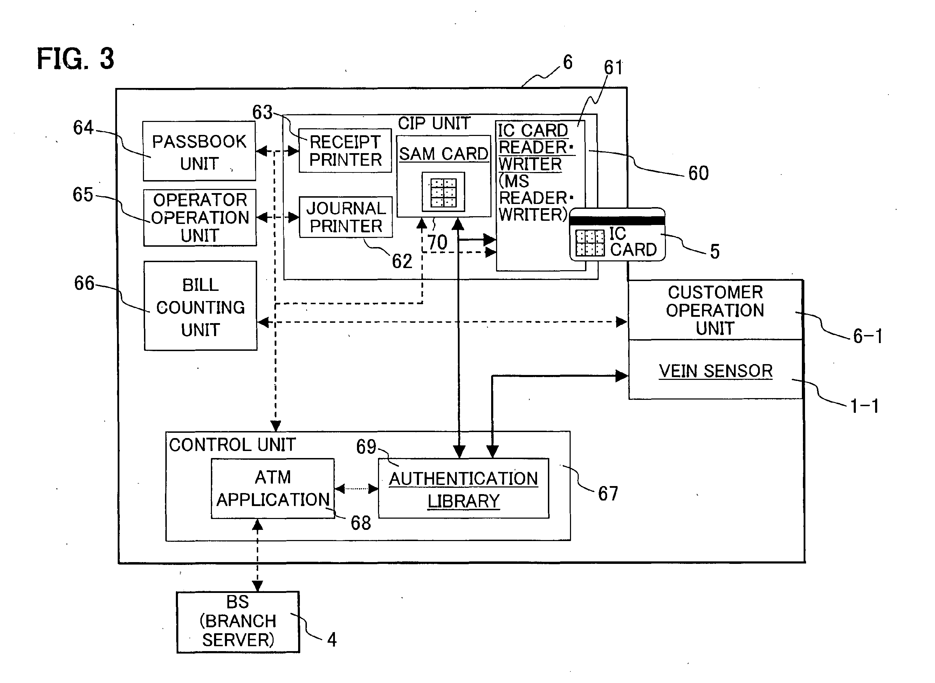

Fig. 1 shows the configuration of an automated transaction system of one embodiment of the invention, Fig. 2 is an external view of the automated transaction device of Fig. 1, and Fig. 3 shows the configuration of the automated transaction device of Fig. 2.

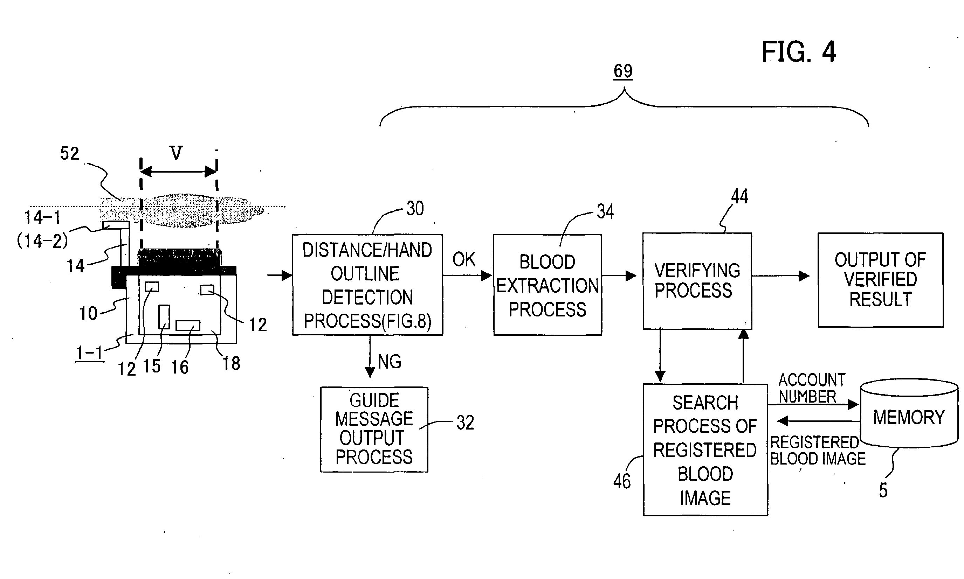

Fig. 1 shows an automated deposit/withdrawal system of a financial institution as the automated transaction system; as the biometric authentication device, an example of a palm vein authentication device is shown. In the service area 2 of the financial institution are provided the palm image capture device 1 explained in Fig. 4 and a branch office terminal (for example, a personal computer) 3 connected thereto. A user requesting vein pattern authentication places his hand over the palm image capture device (hereafter the "image capture device") 1. The image capture device 1 reads the palm, and blood vessel image extraction processing is performed by the terminal 3 to extract the vein pattern, which is registered as vein data in the terminal 3.

This vein data is stored in a storage portion 4a of a database server 4 connected to the terminal 3, or in an individual card (for example, an IC card) 5 carried by the user. The server 4 is connected to a service area terminal 8 in the service area 7 of the financial institution, and the service area terminal 8 is connected to the image capture device 1.

The user places his hand over the image capture device 1 provided in the service area 7 in order to perform^{a} financial transaction. The image capture device 1 reads the palm, and the vein pattern is extracted by the blood vessel image extraction processing of the service area terminal 8. The service area terminal 8 verifies the vein pattern as vein data against the vein data registered in the database server 4 by means of the verification processing, and authenticates the individual.

The server 4 is connected to an ATM (automated cash deposit/withdrawal machine) 6 of the financial institution; the ATM 6 can be used in transactions based on vein authentication. In order to make a withdrawal or perform some other financial transaction using the ATM 6, the user holds his hand over the image capture device 1-1 provided in the ATM 6. The image capture device 1-1 reads the palm of the hand. Similarly to the service area terminal 8, the ATM 6 extracts the vein pattern (blood vessel image), and verifies this as vein data against the vein data registered in the IC card 5 carried by the user (or present in the database server 4), to authenticate the individual.

Fig. 2 and Fig. 3 show the configuration of the ATM (automated transaction machine) 6 of Fig. 1. As shown in Fig. 2, the ATM 6 has, on the front face thereof, a card insertion/ejection aperture 6-4; a bankbook insertion/ejection aperture 6-5; a paper currency insertion/dispensing aperture 6-3; a coin insertion/dispensing aperture 6-2; and a customer operation panel 6-1 for operation and display.

In this example, the image capture device 1-1 is provided on the side of the customer operation panel 6-1. The sensor unit 18 explained in Fig. 4 is mounted on the forward side of the main unit 10 of the image capture device 1-1. On the forward portion (on the user side) of the sensor unit 18 is provided a front guide 14. The front guide 14 comprises a sheet of synthetic resin, transparent or substantially transparent. In order to serve the purposes of guiding the hand of the user in the front and of supporting the wrist, the cross-sectional shape of the front guide 14 has a vertical body and, in the top portion, a horizontal portion 14-1 to support the wrist. A depression 14-2 is formed continuously in the center of the horizontal portion 14-1, to facilitate positioning of the wrist.

Further, the sensor unit 18 of the main unit 10 faces rearward and is inclined upward, and a flat portion 22 is provided therebehind.

As shown in Fig. 3, the ATM 1 has a CIP (Card Reader Printer) unit 60 having a card insertion/ejection aperture 6-4; a bankbook unit 64 having a bankbook insertion/ejection aperture 6-5; a paper currency/coin counter unit 66 having a paper currency insertion/dispensing aperture 6-3 and a coin insertion/dispensing aperture 6-2; an attendant operation unit 65; a control unit 67; a customer operation panel (UOP) 6-1 for operation and display; and an image capture device (vein sensor) 1-1.

The CIP unit 60 has an IC card reader/writer 60 which reads and writes the magnetic stripe and IC chip of an IC card 5; a receipt printer 63 which records transactions on a receipt; and a journal printer 62 which prints the history of transactions on journal forms.

The bankbook unit 64 records transactions on pages of a bankbook, and when necessary turns the pages. The attendant operation portion 65 displays a status and performs operations upon occurrence of a fault or during inspections by operation of an attendant. The paper currency/coin counting unit 66 validates, counts, and stores inserted paper currency and coins, and counts and dispenses paper currency and coins in the required quantities.

The control unit 67 communicates with the server 4, and has an ATM application (program) 68 which controls ATM operation and an authentication library (authentication processing program) 69 for biometrics authentication processing. A portion of this ATM application 68 acts in concert with the authentication library 69 to control biometric authentication guidance screens of the UOP (customer operation panel) 6-1. The ATM application 68 has a function which compares the password data (individual data) on the magnetic stripe of the IC card 5 with the password data input from the UOP 6-1, to authenticate the individual.

### Biometric Authentication Processing

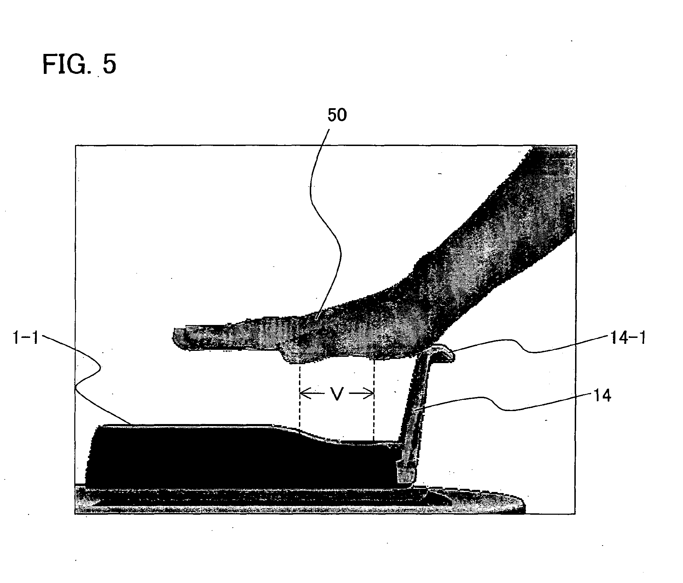

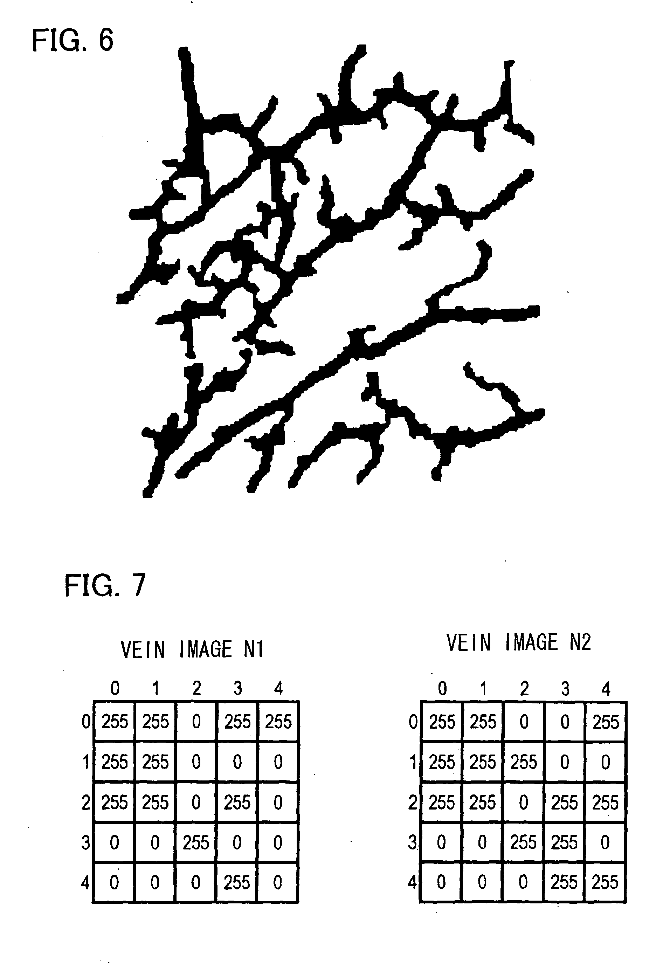

Fig. 4 is a block diagram of the biometric authentication processing of an embodiment of the invention, Fig. 5 is a side view of the image capture device 1-1 of Fig. 4, Fig. 6 explains the detected blood vessel image in Fig. 4, and Fig. 7 explains the verification processing in Fig. 4.

As shown in Fig. 4, the palm image capture device 1-1 of Fig. 1 has a sensor unit 18 mounted substantially in the center of the main unit 10. A front guide 14 is provided in the forward portion (on the user side) of the sensor unit 18. The front guide 14 comprises a sheet of synthetic resin, transparent or substantially transparent.

The front guide 14 serves the purposes of guiding the hand of the user in the front and of supporting the wrist. Hence the front guide 14 provides guidance to the user to guide and support the wrist above the sensor unit 18. As a result, the attitude of the palm of the hand, that is, the position, inclination, and size over the sensor unit 18 can be controlled. The cross-sectional shape of the front guide 14 has a vertical body and, in the top portion, a horizontal portion 14-1 to support the wrist. A depression 14-2 is formed continuously in the center of the horizontal portion 14-1, to facilitate positioning of the wrist.

The sensor unit 18 is provided with an infrared sensor (CMOS sensor) and focusing lens 16 and a distance sensor 15 in the center; on the periphery thereof are provided a plurality of near-infrared light emission elements (LEDs) 12. For example, near-infrared light emission elements 12 are provided at eight places on the periphery, to emit near-infrared rays upwards.

The readable region V of this sensor unit 18 is regulated by the relation between the sensor, focusing lens, and near-infrared light emission region. Hence the position and height of the front guide 14 are set such that the supported wrist is positioned in the readable region V.

As shown in Fig. 5, when the hand 50 is extended with palm flat, the palm has maximum area, and moreover is flat, so that when the palm is subjected to image capture in the image capture region V of the sensor unit 18, an accurate vein pattern which can be used in registration and verification is obtained. As shown in Fig. 5, when the distance from the sensor unit 18 to the palm is within a prescribed range, a sharp and focused image is obtained by the sensor 16 of the sensor unit 18.

Hence as shown in Fig. 4, when the front guide 14 supports the wrist 52 above the sensor unit 18, the user's hand can be guided and supported so that the position, inclination and height of the palm above the sensor unit 18 are made precise with respect to the image capture range of the sensor unit 18.

Returning to Fig. 4, the authentication library (authentication program) 69 of the control unit 67 of the ATM 1 connected to the image capture device 1 executes a series of verification processes 30 to 46. The control unit 67 of the ATM 1 has, for example, a CPU, various types of memory, interface circuitry, and other circuits necessary for data processing. The CPU executes the series of verification processes (processing steps) 30 to 46.

Distance/hand outline detection processing 30 receives the distance from the image capture device 1-1 measured by the distance sensor 15, judges whether the palm or other object is at a distance within a prescribed range from the sensor unit 18, and detects the outline of the hand from the image captured by the sensor unit 18; and judges whether the image can be used in registration and verification processing based on the detected outline. For example, a judgment is made as to whether the palm appears sufficiently in the image.

Guidance message output processing 32 outputs to the UOP 6-1 of the ATM 6 a message guiding the palm to the left or right, forward or backward, upward or downward, when the distance measured by the distance sensor 15 indicates that the hand is outside the image capture range, and when hand outline detection processing 30 indicates that the image cannot be used in registration and verification processing. By this means, the hand of the user is guided into position over the image capture device 1-1.

Blood vessel image extraction processing 34 extracts a vein image from the image of the hand when hand outline detection processing 30 judges that an image has been captured with the hand held correctly. That is, as explained in Fig. 10 and Fig. 11, grayscale data of the image of the palm such as that of Fig. 7 is obtained through differences in reflectivity. The vein pattern image is an image like that shown in Fig. 6; the data is grayscale data such as that in Fig. 7.

Registered blood vessel image search processing 46 searches a storage portion (IC chip memory) of the IC card 5 shown in Fig. 3 for three registered blood vessel image data sets R1, R2, R3 corresponding to the individual ID (account number). As shown in Fig. 7, verification processing 44 compares the blood vessel image data N1 detected by the blood vessel image detection processing 34 with the registered blood vessel image data N2 (R1, R2, R3), performs verification processing, and outputs a verification result to the ATM application 68.

In order to install such a biometric authentication system, the biometrics reader device (image capture device) 1-1 and the authentication program 69 must be installed in the automated transaction machine 6.

### Individual Authentication Control Method

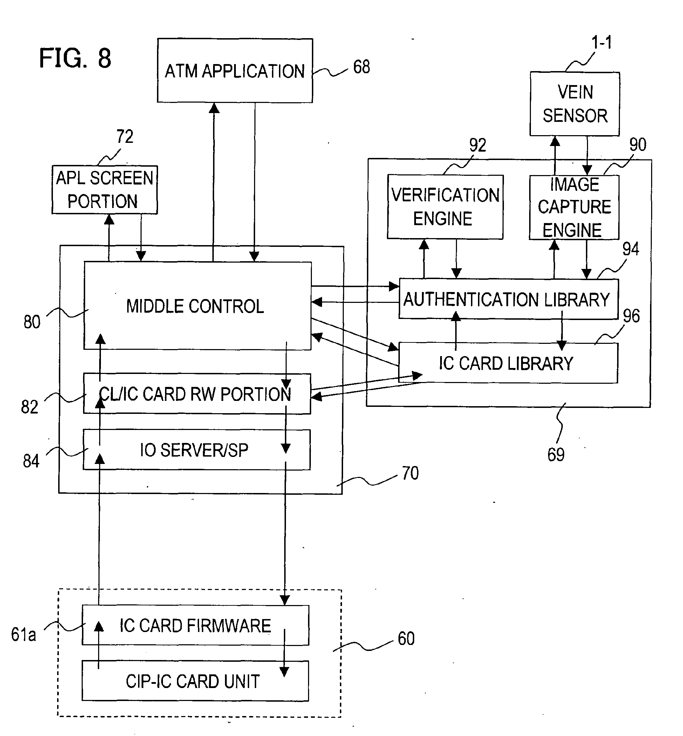

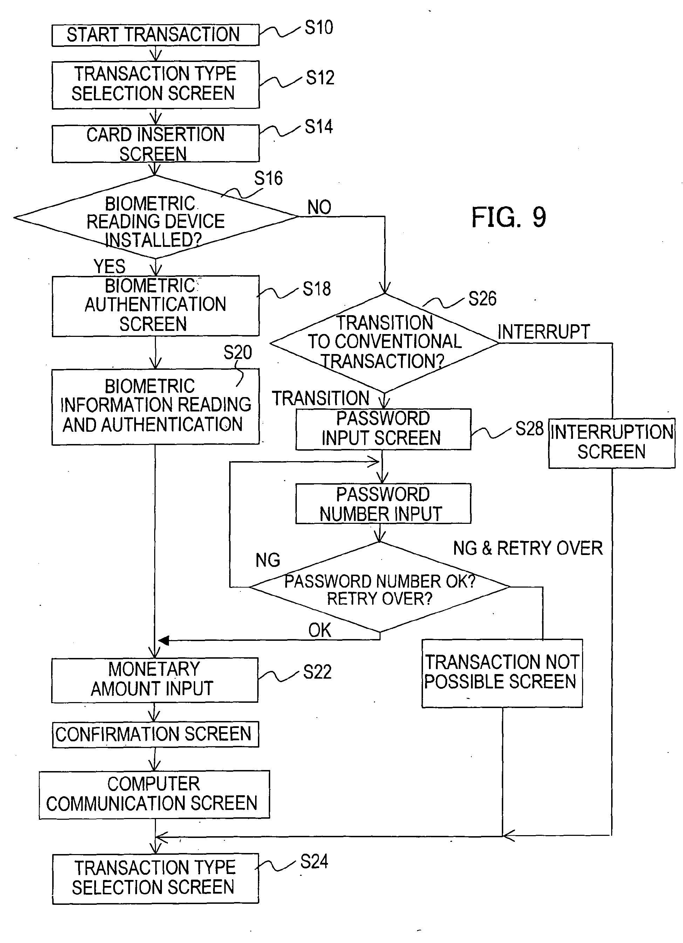

Fig. 8 shows the configuration of the program of an ATM in one embodiment of the invention, and Fig. 9 shows the flow of transaction processing by a program configured as in Fig. 8.

Fig. 8 shows the program configuration of the control unit 67 of the ATM 6 in Fig. 3 in a state of which a vein sensor 1-1 is provided, and moreover an authentication program 69 is installed. As shown in Fig. 8, middleware programs 70, 72 are provided, positioned between the ATM application 68 which performs transaction processing, and the IC card firmware 61a of the IC card reader/writer 60. The middleware program 70 queries the authentication program 69 and determines the individual authentication method, in response to the start of a transaction by the ATM application 68.

That is, the middleware program 70 has an IO server/SP portion 84, which functions as a server and supervisor for the IC card firmware program 61a; a CL/IC card RW portion 82, which functions as a client of the IC card reader/writer; and a middle control portion 80, connected to the CL/IC card RW portion, and which initializes the authentication program 69. This middle control portion 80 exchanges data with the ATM application 68, and controls the application screen portion 72.

The authentication program 69 has an IC card library 96, which reads biometric data from the IC card 5 in the IC card reader/writer 61; an image capture engine 90, which controls image capture by the vein sensor 1-1; a verification engine 92, which performs the verification processing 44 in the above-described Fig. 4; and an authentication library 94, which causes the IC card reader library 96 to perform the registered blood vessel image search processing 46 of the above Fig. 4, and also causes the image capture engine 90 to execute the above-described distance/hand outline detection processing 30 and blood vessel extraction processing 34. The authentication library 94 is initialized by the middle control portion 80, initiates authentication processing, and responds with verification results.

The transaction processing by the program of Fig. 8 is explained, using the flow diagram of Fig. 9.
(S10) The ATM application 68 detects touching of the screen of the UOP 6-1, and initiates a transaction.
(S12) With transaction initiation, the ATM application 68 displays a transaction type selection screen on the UOP 6-1. The user uses the UOP 6-1 to input the transaction type.
(S14) The ATM application 68, upon judging that a cash-dispensing transaction (withdrawal, transfer) has been selected, displays a card insertion screen on the UOP 6-1. The ATM application 68 then instructs the middle control portion 80 to initiate authentication.
(S16) The middle control portion 80 issues an initialization instruction to the IC card library 96 of the authentication program 69, and awaits a response. If there is a response, it is judged that an authentication program 69 and vein sensor 1-1 are installed. If on the other hand there is no response within a fixed amount of time, it is judged that an authentication program 69 and vein sensor 1-1 are not installed.
(S18) The middle control portion 80, upon judging that an authentication program 69 and vein sensor 1-1 are installed, notifies the ATM application 68 that biometric authentication is possible. The middle control portion 80 then causes the APL screen portion 72 to display a biometric authentication screen on the UOP 6-1.
(S20) In order to perform biometric information reading and authentication, the middle control portion 80 receives the account number, read by the ATM application 68 from the magnetic stripe of the IC card 5 as a result of insertion of an IC card into the IC card reader/writer 61, and sends a notification to the IC card library 96. The middle control portion 80 also initializes the authentication library 94 and queries the current state.
   The initialized IC card library 96 reads registered blood vessel image data corresponding to the account number of the IC card 5 through the IC card firmware 61a, via the CL/IC card RW portion 82 and IO server/SP 84 (see Fig. 4). Further, the authentication library 94 which has been started causes the image capture engine 90 to execute image capture operation of the vein sensor 1-1, including the distance/hand outline detection processing 30 and blood vessel image extraction processing 34 of the above Fig. 4. The authentication library 94 then sends an extracted blood vessel image obtained by image capture by the vein sensor 1-1 and registered blood vessel images to the verification engine 92, and causes verification processing to be performed. The middle control portion 80 is notified of the state of progress of the authentication library 94, and the middle control portion 80 displays the state of progress (reading, verifying, verification result) on the UOP 6-1 by means of the APL screen portion 72.
(S22) The middle control portion 80, upon being notified by the authentication library 94 that the verification result is satisfactory, notifies the ATM application 68 that authentication has ended normally. As a result, the ATM application 68 displays on the UOP 6-1 screens to input a monetary amount, to confirm the amount, and to communicate with a computer (the host), which are the normal transaction processes following authentication.
(S24) Upon ending the series of transaction processes the ATM application 68 again displays the screen to select the transaction type.
(S26) If on the other hand in step S16 the middle control portion 80 judges that an authentication program 69 and vein sensor 1-1 are not installed, the middle control portion 80 judges, based on setting information, whether to make a transition to a conventional transaction. If the transition is not made, that is, if the settings stipulate interruption, the APL screen portion 72 displays an interruption screen on the UOP 6-1, and an interruption response is sent to the ATM application 68. The ATM application then proceeds to step S24.
(S28) If in step S26 settings do not stipulate interruption, the middle control portion 80 sends a conventional transaction response to the ATM application 68. The ATM application 68 then performs individual authentication processing using a conventional password. That is, a password input screen is displayed, the password number is input, the input password number is verified against the password number corresponding to the account number of the IC card 5, and if the verification result is satisfactory, processing proceeds to step S22. If on the other hand the verification result is not satisfactory, input of the password number is retried, and if, even after repeating verification and retries a prescribed number of times, the verification result is not satisfactory, a screen indicating the transaction cannot be performed is displayed, and processing proceeds to step S24.

In this way, upon receiving an individual authentication request, the middle control portion 80 investigates whether biometrics devices 1-1, 69 are installed, and depending on the state of installation of biometrics devices 1-1, 69, enables various transaction types. That is, if biometrics devices are installed, biometric authentication transactions are executed. If biometrics devices are not installed, possible transactions are reduced to conventional transactions performed using an IC card or magnetic stripe card. Furthermore, if biometrics devices are not installed, an interruption of transactions using an IC card is also selected.

Hence by installing the middleware program 70, if a biometrics device is not installed, conventional transaction (with authentication using a password) is performed, and if a biometrics device is installed, transactions employing biometric authentication are performed.

Hence by installing the middleware program 70, individual authentication is possible in both cases that a biometrics device is installed or not is installed, so that when a biometrics device is installed subsequently, the transition of the automated transaction machine to biometric authentication can be effected smoothly.

Because this is accomplished using middleware, a conventional ATM application 68 need not be modified, and a transition to biometric authentication can be accomplished simply through installation of biometrics devices 1-1, 69.

### Other Embodiments

In the above embodiment, biometric authentication was explained for the case of palm vein pattern authentication; but application to authentication using finger vein patterns, to palm-prints and other characteristics of the hand, as well as to authentication using fingerprints, facial features, and other biometric characteristics is possible. Further, automated equipment used in financial operations was explained; but application to automated ticket issuing equipment, automated vending equipment, and to automated machines and computers in other areas, as well as to door opening/closing equipment in place of keys, and to other equipment where individual authentication is required, is possible.

The middle control portion 80 queries the authentication program 69 and, depending on whether there is a response, judges whether biometrics devices are installed; but by including information indicating the presence or absence of biometrics devices in configuration information set by the host, this configuration information can be referenced to judge whether biometrics devices have been installed.

Further, this configuration information can be combined with a query to judge not only whether biometrics devices have been installed, but also whether there are defects in any installed biometrics devices; and when biometrics devices are installed, biometric authentication can be combined with password verification.

In the above, embodiments of the invention have been explained; but the invention can be variously modified within the scope of the invention, and these modifications' are not excluded from the scope of the invention.

A judgment is made as to whether a biometrics unit has been installed, and either individual authentication using a biometrics unit or verification of individual data on storage media against input individual data is selected, according to whether a biometrics device has been installed. Therefore, an individual authentication machine in which biometric authentication functions are not installed can make a smooth transition to an individual authentication machine in which biometric authentication functions are installed, and in addition, when a biometrics device is not installed, the individual authentication functions of the individual authentication device can be used, and operation is possible, contributing to the widespread adoption of biometric authentication.

A storage device carried by a user and holding individual data of the user is referred to in the claims as "storage media". One example of such a storage device is the IC card 5 referred to in the above description.

## Claims

1. An individual authentication device which reads individual data from storage media of a user, verifies said data against input individual data, and performs individual authentication, comprising:
a media reading unit which reads said storage media of a user; and
a control unit which judges whether there is installed a biometrics unit which verifies registered biometric characteristic data for a human body according to individual data of said storage media against said biometric characteristic data detected for said human body and performs individual authentication,
wherein said control unit, upon judging that said biometrics unit is installed, executes individual authentication by said biometrics unit, and, upon judging that said biometrics unit is not installed, executes individual authentication by verifying individual data of said storage media against input individual data.

2. The individual authentication device according to Claim 1, wherein said control unit queries said biometrics unit and judges whether said biometrics unit is installed.

3. The individual authentication device according to Claim 1, wherein said control unit judges from configuration information for said individual authentication device whether said biometrics unit is installed.

4. The individual authentication device according to Claim 1,2, or 3, wherein said control unit operates an automated transaction mechanism to perform automated transaction operations in response to the result of said individual authentication.

5. The individual authentication device according to Claim 4 , wherein said control unit, upon judging that said biometrics unit is not installed, interrupts said transaction operation using said storage media.

6. The individual authentication device of any preceding claim , wherein said biometrics unit captures an image of said human body, extracts characteristic data for said human body, verifies said data against said biometric characteristic data registered in said storage media, and performs individual authentication.

7. The individual authentication device according to Claim 6, wherein said biometrics unit comprises:
an image capture device which captures images of said body; and
an authentication unit which extracts said biometric characteristic data from said captured images, verifies said data against said biometric characteristic data registered in said storage media, and performs individual authentication.

8. The individual authentication device of any preceding claim , wherein said biometric characteristic data is a blood vessel image pattern of said human body.

9. The individual authentication device according to Claim 4, wherein said control unit has:
a middleware program, which judges whether said biometrics unit is installed, executes individual authentication by said biometrics unit upon judging that said biometrics unit is installed, and executes individual authentication by verifying individual data in said recording media against input individual data upon judging that said biometrics unit is not installed; and
a transaction processing program, which controls an automated transaction mechanism to perform automated transaction operations in response to the result of said individual authentication.

10. An individual authentication method for reading individual data of storage media of a user and verifying against input individual data to perform individual authentication, and comprising the steps of:
judging whether there is installed a biometrics unit which verifies registered biometric characteristic data for a human body according to individual data of said storage media against said biometric characteristic data detected for said human body and performs individual authentication;
executing individual authentication using said biometrics unit when it is judged that said biometrics unit is installed; and
executing individual authentication to verify individual data of said storage media against input individual data when it is judged that said biometrics unit is not installed.

11. The individual authentication method according to Claim 10, wherein said judgment step comprises a step of querying said biometrics unit to judge whether said biometrics unit is installed.

12. The individual authentication method according to Claim 10, wherein said judgment step comprises a step of judging from configuration information for the individual authentication device whether said biometrics unit is installed.

13. The individual authentication method of claim 10, 11, or 12 , further comprising a step of controlling an automated transaction mechanism which performs automated transaction operations, according to the result of said individual authentication.

14. The individual authentication method according to Claim 13, further comprising a step of interrupting said transaction operations using said storage media upon judging that said biometrics unit is not installed.

15. The individual authentication method of any of claims 10 to 14, wherein said individual authentication step by said biometrics unit comprises:
a step of capturing an image of said body;
a step of extracting said biometric characteristic data for a human body from said captured image; and
a step of verifying said extracted data against registered biometric characteristic data for a human body in said storage media, and performing individual authentication.

16. The individual authentication method according to Claim 10, wherein said biometric characteristic pattern of a human body is a blood vessel image pattern of said human body.

17. The individual authentication method according to Claim 13, wherein said judgment step and selection of said individual authentication step are performed by middleware, and control of an automated transaction mechanism which performs automated transaction operations is controlled by a transaction processing program according to the result of said individual authentication.

18. A program, which causes a computer to execute the steps of:
judging whether there is installed a biometrics unit which verifies registered biometric characteristic data for a human body according to individual data of storage media against said biometric characteristic data detected from said human body and performs individual authentication;
executing individual authentication using said biometrics unit when it is judged that said biometrics unit is installed; and
executing individual authentication to verify individual data of said storage media against input individual data when it is judged that said biometrics unit is not installed.

19. The program according to Claim 18, wherein, as said judgment step, the computer is caused to execute a step of querying said biometrics unit to judge whether said biometrics unit is installed.

20. The program of claim 18 or 19 , causing the computer to further execute a step of controlling an automated transaction mechanism which performs automated transaction operations according to the result of said individual authentication.
